(19) Europäisches Patentamt / European Patent Office / Office européen des brevets

(11) **EP 1 294 105 B1**

(12) **FASCICULE DE BREVET EUROPEEN**

(45) Date de publication et mention de la délivrance du brevet:
**17.10.2007 Bulletin 2007/42**

(51) Int Cl.:
***H04B 3/56*** *(2006.01)*

(21) Numéro de dépôt: **02291888.2**

(22) Date de dépôt: **25.07.2002**

(54) **Procédé et dispositif de couplage pour la transmission de données dans un réseau d'alimentation triphasée**

Verfahren und Ankoppelschaltung zur Datenübertragung in einer dreiphasigen Starkstromleitung

Method and coupling circuit for data transmission system in three phase power line

(84) Etats contractants désignés:
**DE ES FR GB IT SE**

(30) Priorité: **13.09.2001 FR 0111840**

(43) Date de publication de la demande:
**19.03.2003 Bulletin 2003/12**

(73) Titulaire: **Electricité de France**
**75008 Paris (FR)**

(72) Inventeurs:
• **Chaffanjon, Daniel**
**91230 Montgeron (FR)**
• **Issa, Fawsi**
**75014 Paris (FR)**

(74) Mandataire: **Gorrée, Jean-Michel**
**Cabinet Plasseraud**
**52 rue de la Victoire**
**75440 Paris Cedex 09 (FR)**

(56) Documents cités:
**WO-A-98/06188**     **FR-A- 2 038 380**

**Description**

La présente invention concerne des perfectionnements apportés dans le domaine de la transmission d'informations par signaux CPL (Courant Porteur en Ligne) dans une canalisation de transport d'énergie électrique triphasée, et plus précisément l'invention concerne la transmission d'informations par signaux CPL hautes fréquences dans une canalisation de transport d'énergie électrique triphasée, notamment, bien que non exclusivement, basse tension.

Le problème qui est à la base de l'invention réside dans le fait que, si le triphasé est couramment utilisé aux fréquences industrielles (basse fréquence de 50 Hz, 60 Hz, ...), il ne l'est pas dans le domaine des hautes fréquences, notamment parce que les générateurs de signaux HF sont bipolaires : ces générateurs ne sont donc connectables qu'entre deux phases ou entre phase et neutre.

Les canalisations de transport d'énergie électrique triphasée, notamment basse tension, sont constituées d'un câble à trois conducteurs de phases $\varphi_1$, $\varphi_2$, $\varphi_3$ et d'un conducteur de neutre N qui, souvent, est physiquement au contact de la face interne d'une enveloppe métallique en acier.

Si on applique un signal CPL haute fréquence, comme on le fait habituellement pour les signaux CPL basse fréquence (c'est-à-dire inférieure à environ 150 kHz), entre le neutre N, d'une part, et les trois phases $\varphi_1$, $\varphi_2$, $\varphi_3$, d'autre part, on attaque le mode de propagation qui donne lieu aux affaiblissements et aux déformations les plus forts du signal.

Si on applique un signal CPL haute fréquence entre le neutre N et une seule $\varphi_1$ ou $\varphi_3$ des phases, la propagation du signal CPL HF est plutôt médiocre et la conversion monophasé/triphasé des branchements est plus ou moins efficace selon la phase utilisée.

Si on applique un signal CPL haute fréquence entre le neutre N et la seule phase $\varphi_2$, la propagation du signal CPL HF est passable, mais la conversion monophasé/triphasé des branchements est plus ou moins efficace.

Si on applique un signal CPL haute fréquence entre les deux phases $\varphi_1$ et $\varphi_3$, la propagation du signal CPL HF est performante, mais la conversion monophasé/triphasé des branchements sur la phase $\varphi_2$ est peu efficace.

Si on applique un signal CPL haute fréquence entre les deux phases $\varphi_1$ et $\varphi_3$, d'une part, et la phase $\varphi_2$, d'autre part, la propagation du signal CPL HF est performante, mais la conversion monophasé/triphasé des branchements n'est que modérément efficace.

Le document WO 98 06 188 décrit un appareil pour coupler des signaux CPL haute fréquence à une canalisation de transport d'énergie électrique. Ce document a pour but de réduire la propagation dans un des deux sens possibles afin d'optimiser la propagation des signaux vers les utilisateurs.

L'invention a donc pour but de surmonter les difficultés exposées ci-dessus et de proposer des moyens - procédé et dispositif - propres à permettre une propagation optimale du signal CPL HF et une bonne conversion monophasé/triphasé au droit des branchements.

A ces fins, l'invention propose, selon un premier de ses aspects, un procédé de transmission d'informations par signaux CPL haute fréquence dans une canalisation de transport d'énergie électrique triphasée, caractérisé en ce qu'un générateur de signal CPL haute fréquence à sortie bipolaire est couplé aux trois phases de la canalisation triphasée en réalisant, pour une bande de fréquences prédéterminée centrée sur une fréquence nominale HF du signal CPL, un champ tournant à partir de deux composantes en quadrature de phase du signal CPL.

Avantageusement, les deux composantes en quadrature de phase sont déphasées symétriquement respectivement de $+\dfrac{\pi}{4}$ et $-\dfrac{\pi}{4}$ par rapport au signal CPL.

Dans leur structure habituelle, les réseaux basse tension, hors zones purement rurales, comportent des départs directs dans lesquels, sur un premier tronçon de 200 à 300 mètres, aucun branchement n'existe. Il importe donc que les signaux CPL HF puissent franchir à coup sûr cette distance. Les modes propres interphases le permettent. Le procédé conforme à l'invention permet cette mise en oeuvre.

Il est possible d'effectuer la conversion monophasé/triphasé par composants passifs dès lors que la bande passante relative n'excède pas 20 % à 30 %. Pour une bande passante relative plus importante (spectre étalé), il faut attaquer le coupleur par un générateur disposant de deux sorties en quadrature de phase, ce qui est, aujourd'hui, aisément réalisable en électronique numérique.

Selon un second de ses aspects, l'invention propose un mode de réalisation d'un dispositif de couplage triphasé pour signaux CPL haute fréquence, propre à coupler un générateur de signal CPL HF à sortie bipolaire aux trois phases d'une canalisation triphasée de transport d'énergie électrique, pour la mise en oeuvre du procédé précédent, caractérisé en ce qu'il comprend :

- deux transformateurs d'adaptation ($T_B$, $T_H$),

  • un premier transformateur ($T_B$) ayant son enroulement secondaire interposé entre deux phases ($\varphi_1$, $\varphi_3$) et
  • un second transformateur ($T_H$) ayant son enroulement secondaire interposé entre l'autre phase ($\varphi_2$) et le point

milieu de l'enroulement secondaire du susdit premier transformateur ($T_B$), et

- deux moyens déphaseurs ($\Delta_B$, $\Delta_H$) dont les entrées respectives sont raccordées en parallèle au générateur de signal CPL HF et dont les sorties respectives sont raccordées aux enroulements primaires respectifs des deux susdits transformateurs ($T_B$, $T_H$), lesdits moyens déphaseurs introduisant des déphases respectifs ($\Phi_B$, $\Phi_H$) tels

que $\left| \Phi_H - \Phi_B \right| = \dfrac{\pi}{2}$ .

De préférence,

. un premier moyen déphaseur ($\Delta_B$) est propre à introduire un déphasage et

. un second moyen déphaseur ($\Delta_H$) est propre à introduire un déphasage $\Phi_H = -\dfrac{\pi}{4}$ .

Dans un exemple de réalisation simple,

. le premier moyen déphaseur ($\Delta_B$) est un condensateur, et
. le second moyen déphaseur ($\Delta_H$) est une bobine d'inductance.

L'invention sera mieux comprise à la lecture de la description détaillée qui suit de certains modes de réalisation préférés donnés uniquement à titre d'exemples non limitatifs. Dans cette description on se réfère aux dessins annexés sur lesquels :

- la figure 1 est une représentation schématique d'un branchement conforme à l'invention, illustrant le procédé de l'invention ;
- la figure 2 est une schéma illustrant un mode de réalisation de base d'un dispositif de couplage conforme à l'invention pour la mise en oeuvre du procédé de l'invention ; et
- la figure 3 est un schéma illustrant un exemple de réalisation préféré du dispositif de couplage de la figure 2.

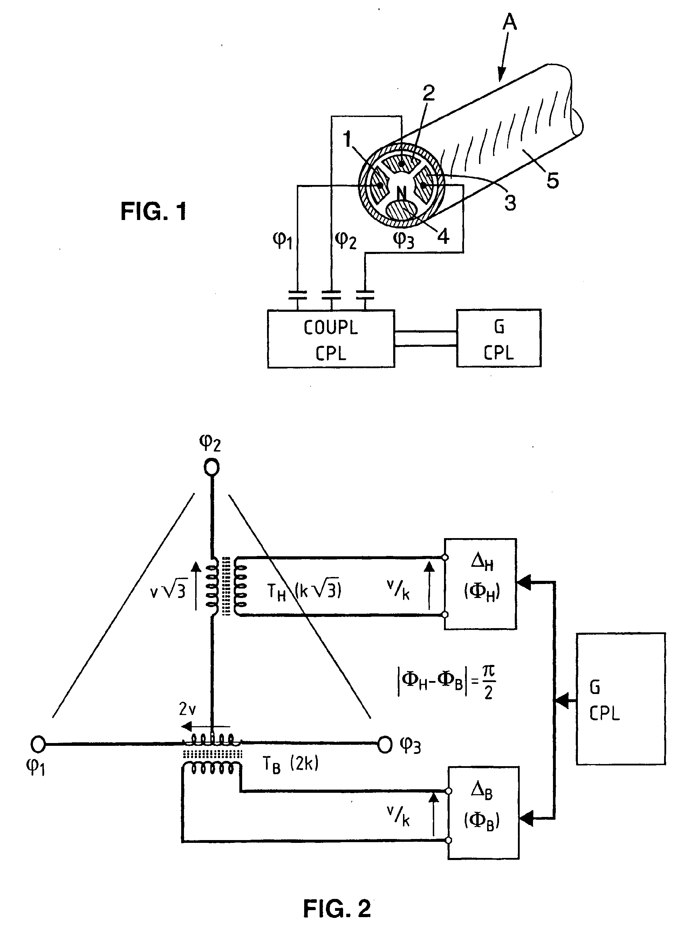

En se reportant tout d'abord à la figure 1, un câble électrique A propre à constituer une canalisation de transport électrique triphasée, notamment basse tension, comprend trois conducteurs de phase 1 (phase $\varphi_1$), 2 (phase $\varphi_2$) et 3 (phase $\varphi_3$) respectivement et un conducteur 4 de neutre N qui, souvent, est physiquement au contact de la face interne d'une enveloppe ou gaine métallique 5 par exemple en acier.

Conformément à l'invention, un générateur G de signal CPL haute fréquence à sortie bipolaire est couplé (en général par l'intermédiaire d'un modem CPL non illustré) aux trois phases $\varphi_1$, $\varphi_2$, et $\varphi_3$ de la canalisation triphasée en réalisant, pour une bande de fréquences prédéterminée centrée sur une fréquence nominale HF du signal CPL, un champ tournant à partir de deux composantes en quadrature de phase du signal CPL. Avantageusement ces deux composantes en quadrature de phase sont déphasées symétriquement respectivement de $+\dfrac{\pi}{4}$ et $-\dfrac{\pi}{4}$ par rapport au signal CPL.

Ce champ tournant est généré, selon l'invention, par un dispositif de couplage COUPL CPL qui convertit le signal CPL HF monophasé délivré par le générateur G (ou le modem correspondant) en un signal CPL HF triphasé à champ tournant appliqué aux trois phases ($\varphi_1$, ($\varphi_2$, $\varphi_3$, sans connexion au neutre N.

Grâce à ce type de couplage, on obtient une propagation optimale du signal CPL HF en même temps qu'on réalise une bonne conversion monophasé/triphasé au droit des branchements. On est ainsi assuré en pratique que le signal CPL HF pourra franchir le tronçon préliminaire (en pratique de l'ordre de 200 à 300 mètres), dépourvu de branchements, de la canalisation.

Cette conversion peut être obtenue par mise en jeu de composants passifs si la bande passante relative n'excède pas 20 % à 30 % de la fréquence centrale (par exemple bande de l'ordre de 2 MHz au voisinage d'une fréquence de 8 MHz du signal CPL).

Un mode de réalisation de base d'un dispositif de couplage de ce type, propre à générer le champ tournant requis à deux composantes en quadrature de phase, est illustré à la figure 2.

Ce dispositif de couplage met en oeuvre deux transformateurs d'adaptation $T_B$ et $T_H$.

Le premier transformateur $T_B$ (rapport de transformation 2k) a son enroulement secondaire connecté entre les phases $\varphi_1$ et $\varphi_3$ ; les tensions sont 2v aux bornes de son enroulement secondaire et v/k aux bornes de son enroulement primaire, bornes auxquelles sont connectées les bornes de sortie d'un premier moyen déphaseur $\Delta_B$ dont l'entrée est connectée au générateur G de signal CPL HF.

Le second transformateur $T_H$ (rapport de transformation k√3) a son enroulement secondaire connecté entre l'autre phase $\varphi_2$ et le point milieu de l'enroulement secondaire du premier transformateur $T_B$ ; les tensions sont v√3 aux bornes de son enroulement secondaire et v/k aux bornes de son enroulement primaire, bornes auxquelles sont connectées les sorties d'un moyen déphaseur $\Delta_H$ dont l'entrée est connectée au générateur G de signal CPL HF.

Les moyens déphaseurs $\Delta_B$ et $\Delta_H$ sont propres à introduire des déphasages respectifs $\Phi_B$ et $\Phi_H$ tels que

$$\left|\Phi_H - \Phi_B\right| = \frac{\pi}{2}.$$

En pratique, on prendra des déphasages symétriques de $\frac{\pi}{4}$, avec $\Phi_B = -\frac{\pi}{4}$ et $\Phi_H = +\frac{\pi}{4}$.

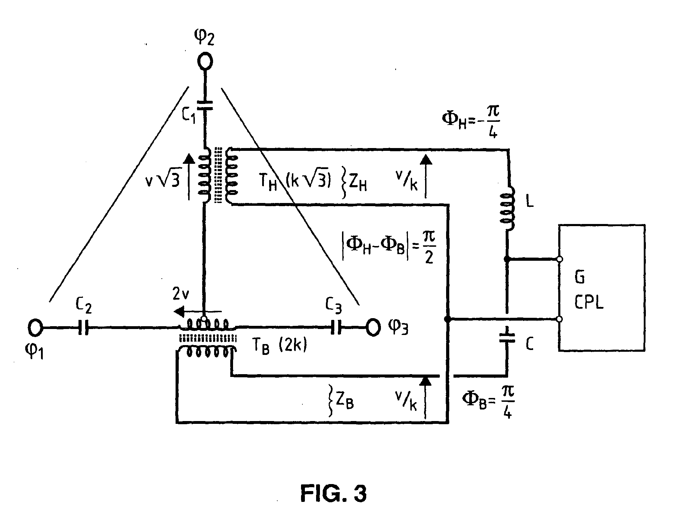

Dans un exemple de mise en oeuvre simple, le premier moyen déphaseur $\Delta_B$ est constitué par un condensateur et le second moyen déphaseur $\Delta_H$ est constitué par une inductance. La figure 3 illustre un exemple de réalisation d'un dispositif de couplage ainsi constitué : C désigne un condensateur constituant le premier moyen déphaseur $\Delta_B$ introduisant un déphasage $\Phi_B = +\frac{\pi}{4}$, L désigne une inductance constituant le second moyen déphaseur $\Delta_H$ introduisant un déphasage $\Phi_H = -\frac{\pi}{4}$, et $C_1$, $C_2$ et $C_3$ désignent trois condensateurs de découplage pour les connexions avec respectivement les trois phases $\varphi_1$, $\varphi_2$, $\varphi_3$ de la canalisation.

Les conditions optimales de fonctionnement sont remplies lorsque les impédances $Z_4 = L\omega$ et $Z_3 = \frac{1}{C\omega}$ respectives des deux circuits déphaseurs sont égales. De façon pratique, pour un câble souterrain ayant une section conductrice de 3 x 150 mm$^2$, les impédances caractéristiques sont

- pour le mode $\varphi_1$-$\varphi_3$ : 24 $\Omega$
- pour le mode $\varphi_2$-($\varphi_1$+$\varphi_3$) : 18 $\Omega$

Eu égard aux rapports de transformation des deux transformateurs d'adaptation : k√3 pour le transformateur $T_H$ et 2k pour le transformateur $T_B$, les impédances apparentes sont :

$$Z_H = 18 \times 1/3k^2$$

$$Z_B = 24 \times 1/4k^2$$

Si k = 1, ces impédances deviennent :

$$Z_H = Z_B = 6 \ \Omega$$

Dans ces conditions, pour une valeur typique F = 8 MHz de la fréquence du signal CPL HF, les valeurs respectives de l'inductance de la bobine L et de la capacité du condensateur C sont :

$$L = 6/(2\pi \times 8 \times 10^6) = 120 \ nH$$

$$C = 1/(6 \times 2\pi \times 8 \times 10^6) = 3,3 \text{ nF}$$

Quant aux condensateurs de découplage $C_1$, $C_2$, $C_3$, ils ont un rôle de séparation des signaux HF vis-à-vis du signal à 50 Hz : en pratique, il s'agit de condensateurs ayant une capacité de quelques nanofarads.

Pour fixer les idées, on peut indiquer que, pour un tronçon de canalisation issu d'un poste de distribution électrique HTA/BT et constitué d'un câble classique d'une longueur de l'ordre de 100 m, on peut escompter, à condition d'utiliser un mode optimal de propagation en mettant en oeuvre les dispositions de l'invention, un affaiblissement compris entre 5 dB et 10 dB, en fonction de la fréquence, et une distorsion de temps de groupe de l'ordre du pourcent du temps total de propagation.

Par comparaison, l'excitation du même tronçon avec un couplage traditionnel entre, d'une part, les trois phases et, d'autre part, le neutre entraîne un affaiblissement important (d'au moins 30 dB) et une dispersion de temps de groupe (jusqu'à 100 % du temps de propagation normal) largement supérieure à ce qui est admissible pour des transmissions de données à débit élevé.

Etant donné que les dispositions de l'invention visent des applications pour lesquelles la moyenne des distances à couvrir est de l'ordre de 200 à 300 mètres, que la puissance qu'il est concevable d'injecter se limite à quelques dizaines de milliwatts et que le bruit présent sur les canalisations de transport d'énergie électrique est généralement supérieur à celui que l'on trouve sur les lignes téléphoniques ou dans le domaine radioélectrique, un affaiblissement total atteignant une valeur de 80 dB est inacceptable. Au surplus, avec un couplage traditionnel la distorsion du signal serait telle qu'il faudrait renoncer à transmettre des bits dont la durée serait inférieure à la milliseconde, ce qui ne serait pas envisageable.

La mise en oeuvre des moyens propres à l'invention offre la possibilité de faire se propager correctement un signal CPL HF avec un affaiblissement et une distorsion de type voie de télécommunication. Il en résulte la faculté soit d'injecter une puissance moindre et donc de réduire les nuisances imputables au rayonnement des conducteurs ; soit, pour une puissance donnée d'injection du signal, d'accroître la portée et ainsi, dans le cas de la desserte d'un point éloigné, de rendre inutile l'interposition de répéteurs dont il est connu que la présence entraîne une réduction du débit global des données échangées.

**Revendications**

1. Procédé de transmission d'informations par signaux courant posteur en ligne CPL haute fréquence dans une canalisation de transport d'énergie électrique triphasée,
   **caractérisé en ce qu'**un générateur de signal CPL HF à sortie bipolaire est couplé aux trois phases de la canalisation triphasée en réalisant, pour une bande de fréquences prédéterminée centrée sur une fréquence nominale HF du signal CPL, un champ tournant à partir de deux composantes en quadrature de phase du signal CPL.

2. Procédé selon la revendication 1, **caractérisé en ce que** les deux composantes en quadrature de phase sont déphasées symétriquement respectivement de $+\dfrac{\pi}{4}$ et $-\dfrac{\pi}{4}$ par rapport au signal CPL.

3. Dispositif de couplage triphasé pour signaux CPL hautes fréquences, propre à coupler un générateur (G) de signal CPL HF à sortie bipolaire aux trois phases ($\varphi_1$, $\varphi_2$ $\varphi_3$) d'une canalisation triphasée de transport d'énergie électrique (A), pour la mise en oeuvre du procédé selon la revendication 1 ou 2,
   **caractérisé en ce qu'**il comprend :

   - deux transformateurs d'adaptation ($T_B$, $T_H$),

      . un premier transformateur ($T_B$) ayant son enroulement secondaire interposé entre deux phases ($\varphi_1$, $\varphi_3$) et
      . un second transformateur ($T_H$) ayant son enroulement secondaire interposé entre l'autre phase ($\varphi_2$) et le point milieu de l'enroulement secondaire du susdit premier transformateur ($T_B$),
      et

   - deux moyens déphaseurs ($\Delta_B$, $\Delta_H$) dont les entrées respectives sont raccordées en parallèle au générateur de signal CPL HF et dont les sorties respectives sont raccordées aux enroulements primaires respectifs des deux susdits transformateurs ($T_B$, $T_H$), lesdits moyens déphaseurs introduisant des déphases respectifs ($\Phi_B$,

$\Phi_H$) tels que $\left| \Phi_H - \Phi_B \right| = \dfrac{\pi}{2}$ .

**4.** Dispositif de couplage selon la revendication 3, **caractérisé en ce que**

. un premier moyen déphaseur ($\Delta_B$) est propre à introduire un déphasage $\Phi_B = +\dfrac{\pi}{4}$

et

. un second moyen déphaseur ($\Delta_H$) est propre à introduire un déphasage $\Phi_H = -\dfrac{\pi}{4}$ .

**5.** Dispositif de couplage selon la revendication 4, **caractérisé en ce que**

. le premier moyen déphaseur ($\Delta_B$) est un condensateur (C), et
. le second moyen déphaseur ($\Delta_H$) est une bobine d'inductance (L).

**Claims**

**1.** A process for transmitting information by high frequency power line communication signals in a three-phase electrical wiring system, **characterised in that** a generator with a bipolar output producing a HF power line communication signal is connected to the three phases of the three-phase wiring system producing, for a band of predetermined frequencies centred around a nominal HF frequency of the power line communication signal, a rotating field from two components in phase quadrature to the power line communication signal.

**2.** A process in accordance with claim 1, **characterised in that** the two components in phase quadrature are symmetrically phase-shifted respectively $+\dfrac{\pi}{4}$ and $-\dfrac{\pi}{4}$ with respect to the power line communication signal.

**3.** A three-phase coupling device for high frequency power line communication signals suitable for connecting a generator (G) of a HF power line communication signal with a bipolar output to three phases ($\phi_1$, $\phi_2$, $\phi_3$) of a three-phase electrical wiring system (A), for performing the process according to claims 1 or 2, **characterised in that** it comprises:

- two matching transformers ($T_B$, $T_H$),

o a first transformer ($T_B$) having its secondary winding interposed between two phases ($\phi_1$, $\phi_3$), and
o a second transformer ($T_H$) having its secondary winding interposed between and the other phase ($\phi_2$) and the centre point of the second winding of the above first transformer ($T_B$), and

- two phase shifters ($\Delta_B$, $\Delta_H$) the respective inputs of which are connected in parallel to the HF power line communication signal generator and of which the respective outputs are connected to the respective primary windings of the above two transformers ($T_B$, $T_H$), whereby the above phase shifters produce the respective phase shifts ($\Phi_B$, $\Phi_H$) such that $\left| \Phi_H - \Phi_B \right| = \dfrac{\pi}{2}$ .

**4.** A coupling device in accordance with claim 3, **characterised in that**

o a first phase shifter ($\Delta_B$) is suitable to produce a phase shift $\Phi_B = +\dfrac{\pi}{4}$

and

o a second phase shifter ($\Delta_H$) is suitable to produce a phase shift $\Phi_H = -\dfrac{\pi}{4}$ .

**5.** A coupling device in accordance with claim 4, **characterised in that**

> o the first phase shifter ($\Delta_B$) is a condenser (C), and
> o the second phase shifter ($\Delta_H$) is an inductance coil (L).

**Patentansprüche**

**1.** Verfahren zur Informationsübertragung durch hochfrequente PLC (Powerline Communication)-Signale in einer dreiphasigen Leitung zur Übertragung elektrischer Energie,
**dadurch gekennzeichnet, dass** ein Generator mit bipolarem Ausgang, welcher hochfrequente PLC-Signale erzeugt, an die drei Phasen der dreiphasigen Leitung angekoppelt wird, indem aus zwei Quadraturphase-Komponenten des PLC-Signals ein Drehfeld für ein vorbestimmtes Frequenzband erzeugt wird, wobei das vorbestimmte Frequenzband bei einer im Hochfrequenzbereich liegenden Nennfrequenz des PLC-Signals zentriert ist.

**2.** Verfahren nach Anspruch 1, **dadurch gekennzeichnet, dass** die zwei Quadraturphase-Komponenten symmetrisch um jeweils $+\dfrac{\pi}{4}$ und $-\dfrac{\pi}{4}$ zum PLC-Signal phasenverschoben werden.

**3.** Dreiphasige Ankoppelschaltung für hochfrequente PLC-Signale zum Ankoppeln eines Generators (G) mit bipolarem Ausgang, welcher hochfrequente PLC-Signale erzeugt, an die drei Phasen ($\phi_1$, $\phi_2$, $\phi_3$) einer dreiphasigen Leitung (A) zur Übertragung elektrischer Energie zur Durchführung des Verfahrens nach Anspruch 1 oder 2,
**dadurch gekennzeichnet, dass** die dreiphasige Ankoppelschaltung aufweist:

> - zwei Anpassungstransformatoren ($T_B$, $T_H$),
>
> > . einen ersten Anpassungstransformator ($T_B$), dessen Sekundärwicklung zwischen zwei Phasen ($\phi_1$, $\phi_3$) angeordnet ist, und
> >
> > . einen zweiten Transformator ($T_H$), dessen Sekundärwicklung zwischen der weiteren Phase ($\phi_2$) und dem Mittelpunkt der Sekundärwicklung des oben genannten ersten Transformators ($T_B$) angeordnet ist, und
>
> - zwei Phasenverschiebungsmittel ($\Delta_B$, $\Delta_H$), wobei die jeweiligen Eingänge der zwei Phasenverschiebungsmittel ($\Delta_B$, $\Delta_H$) parallel zum Generator, welcher hochfrequente PLC-Signale erzeugt, geschaltet sind, und wobei die jeweiligen Ausgänge der zwei Phasenverschiebungsmittel ($\Delta_B$, $\Delta_H$) an den jeweiligen Primärwicklungen der zwei oben genannten Transformatoren ($T_B$, $T_H$) angeschlossen sind, und wobei die besagten Phasenverschiebungsmittel jeweils die Phasenverschiebungen ($\Phi_B$, $\Phi_H$) derart, dass $\left|\Phi_H - \Phi_B\right| = \dfrac{\pi}{2}$ einleiten.

**4.** Ankoppelschaltung nach Anspruch 3,
**dadurch gekennzeichnet, dass**

> . ein erstes Phasenverschiebungsmittel ($\Delta_B$) dazu ausgebildet ist, eine Phasenverschiebung $\Phi_B = +\dfrac{\pi}{4}$ einzuleiten, und
>
> . ein zweites Phasenverschiebungsmittel ($\Delta_H$) dazu ausgebildet ist, eine Phasenverschiebung $\Phi_H = -\dfrac{\pi}{4}$ einzuleiten.

**5.** Ankoppelschaltung nach Anspruch 4,
**dadurch gekennzeichnet, dass**

. das erste Phasenverschiebungsmittel ($\Delta_B$) ein Kondensator (C) ist, und
. das zweite Phasenverschiebungsmittel ($\Delta_H$) eine Induktionsspule (L) ist.

**FIG. 1**

**FIG. 2**

$$\left|\Phi_H - \Phi_B\right| = \frac{\pi}{2}$$

**FIG. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9806188 A